# EUROPEAN PATENT APPLICATION

(11) **EP 0 992 301 A2**
(43) Date of publication of application: **12.04.2000**
(21) Application number: 99202065.1
(22) Date of filing: 25.06.1999
(51) Int. Cl.: B21D 51/52

(54) **Process and equipment for the manufacture of metal sheet box-like structure with seam folded edges**

(30) Priority: 05.10.1998 IT MI982130
(71) Applicant: SALVAGNINI ITALIA S.p.A., I-36040 Sarego (Vicenza) (IT)
(72) Inventor: Venturini, Gianfranco, 37044 Cologna Veneta, Verona (IT)
(74) Representative: Mittler, Enrico

(57) **Abstract**

The process according to the invention includes a step of punching in which a punching machine (1), in addition to the normal cutting of the metal sheet (5), also executes punching of adjacent portions of the foldable limbs (9, 10) of the metal sheet for forming complementary tongue elements (13, 14) that are seam foldable to each other. Following is a folding step in which a bending machine (2) carries out folding of said side limbs (9, 10) and, simultaneously, provides a seam folded engagement of said complementary tongue elements (13, 14) for mutual fixing of the adjacent limbs (9, 10).

## Description

The present invention concerns a process for the manufacture of metal sheet box-like structures with seam folded edges and an equipment for actuating the aforesaid process.

The manufacture of box-like metal structures currently involves the passage of a metal sheet under a punching machine for the cutting of the same metal sheet in the desired shape, that is with a central squared or rectangular part and four side limbs that are individually foldable to form the edges of the box-like structure.

The metal sheet thus punched is then transferred to a bending machine, that carries out the sequential bending of the side limbs for the formation of the desired box-like structure.

Finally, by using an additional machinery, the adjacent side limbs of the box-like structure are fixed to each other by means of various techniques, for example by forcing projections of one edge into cavities of another one or by the use of rivets or yet by welding.

In any case, as already said, the limb fixing operation is carried out through the use of a third machine that is added to the first two with consequent financial effort and additional use of space.

In view of this state of the art, object of the present invention has been to provide a process that allows to produce box-like structures with folded edges without having to resort to the use of a separate machine for fixing the edges after the punching and bending operations.

According to the invention, such object has been attained with a process comprising, in sequence, a step of punching of a metal sheet for forming a central part with foldable side limbs and a bending step for folding said side limbs with respect to said central part so as to form the desired box-like structure, characterized in that the punching step also involves punching of adjacent portions of said foldable limbs for the formation of complementary tongue elements that are seam foldable to each other and the bending step involves the provision of a seam folded engagement of said complementary tongue elements for mutual fixing of the adjacent limbs.

According to the invention, for actuating the aforesaid process an equipment can be used, which is made up only of a punching machine and of a bending machine, characterized in that the punching machine comprises, in addition to the usual metal sheet cutting punches, also a pair of additional punches to carry out the punching of adjacent portions of the foldable limbs of the metal sheet for the formation of complementary tongue elements that can be seam folded to each other.

With a simple modification of the punching machine it is thus avoided the need to use a third machine dedicated only to the mutual fixing of the limbs of the box-like structure.

The characteristics of the present invention will be made more evident by the following detailed description of an embodiment thereof that is illustrated as a non limiting example in the enclosed drawings, in which:
Figure 1 shows schematically, in operating sequence, a punching machine and a bending machine for actuating the process according to the invention;
Figure 2 shows in perspective schematic view a punching machine which can be used for actuating the process according to the invention;
Figures 3-5 show, in subsequent operating steps, the magnified and sectioned detail of a first punch-die unit inserted in the punching machine of Figure 2 for forming a first type of seam foldable tongue element;
Figure 6 shows the magnified detail of the tongue element obtainable with the punch-die unit of Figures 3-5;
Figures 7-10 show, in subsequent operating steps, the magnified and sectioned detail of a second punch-die unit inserted in the punching machine of Figure 2 for forming a second type of seam foldable tongue element;
Figure 11 shows the magnified detail of the tongue element obtainable with the punch-die unit of Figures 7-10;
Figure 12 shows in perspective view a metal sheet punched with the machine of Figure 2;
Figures 13 and 14 show in perspective view the magnified details of first and second seam foldable tongue elements that were made in the foldable limbs of the metal sheet of Figure 12;
Figure 15 shows in perspective view the box-like structure with folded seam folded edges obtained with the process according to the invention;
Figure 16 shows two tongue elements like those in Figures 13 and 14 in a seam folded condition, as sectioned according to line XVI-XVI of Figure 15.

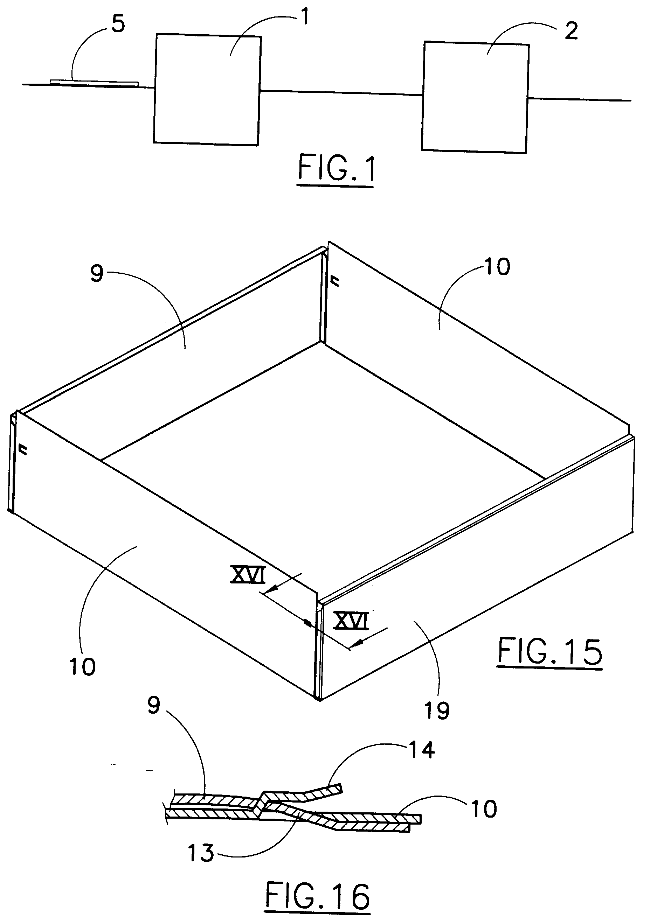

With reference to Figure 1, the process according to the invention is actuated by using a punching machine 1 and a bending machine 2 in sequence.

The punching machine 1 is of the general type known, for instance, from the European patent EP-B-0028588, while the bending machine 2 is in turn of the type, also known per se, described in the patent US-A-4242898.

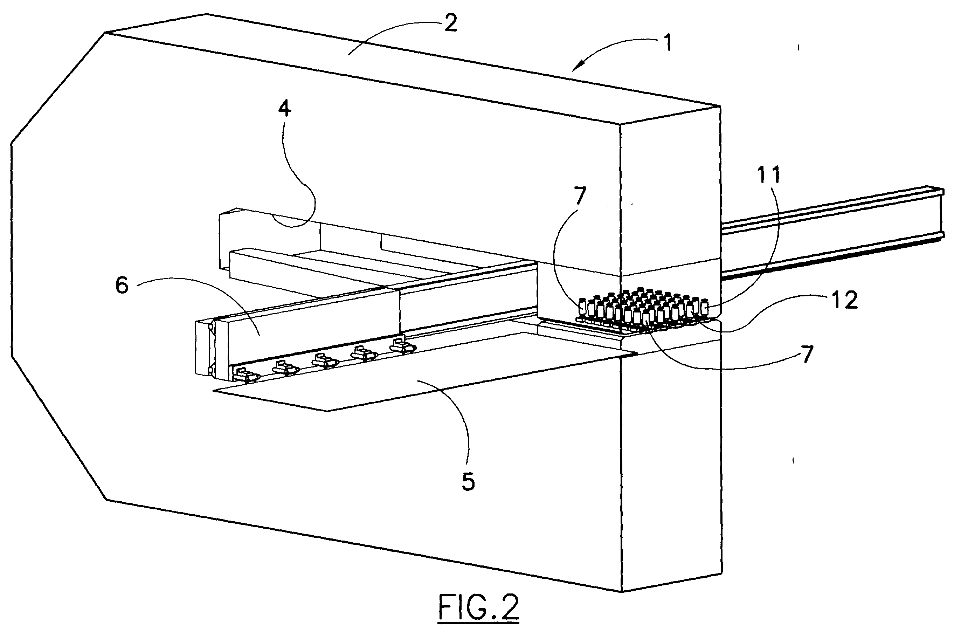

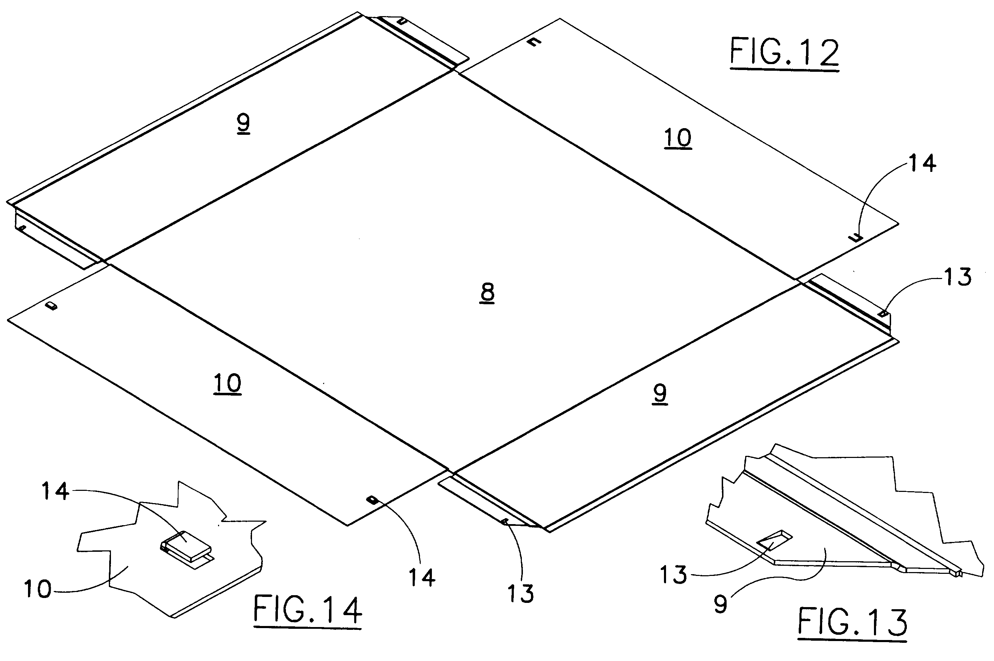

The punching machine 1 is shown in greater details in figure 2 and comprises a fixed frame 3 with wide throat 4, in which a metal sheet 5 can be moved owing to a manipulator 6 in order to sequentially place different parts of the same metal sheet under the action of various punch-die units 7 suitable to carry out the cutting of the metal sheet in order to obtain the plane structure of Figure 12, composed of a central part 8 having squared or rectangular shape and of two pairs of foldable side limbs 9 and 10.

Unlike the normal known punching machines the one in Figure 2 also comprises first and second supplementary punch-die units 11 and 12 suitable to provide in adjacent portions of the limbs 9 and 10, respectively, first and second tongue elements 13 and 14 which are seam foldable to each other like those shown in Figures 13 and 14.

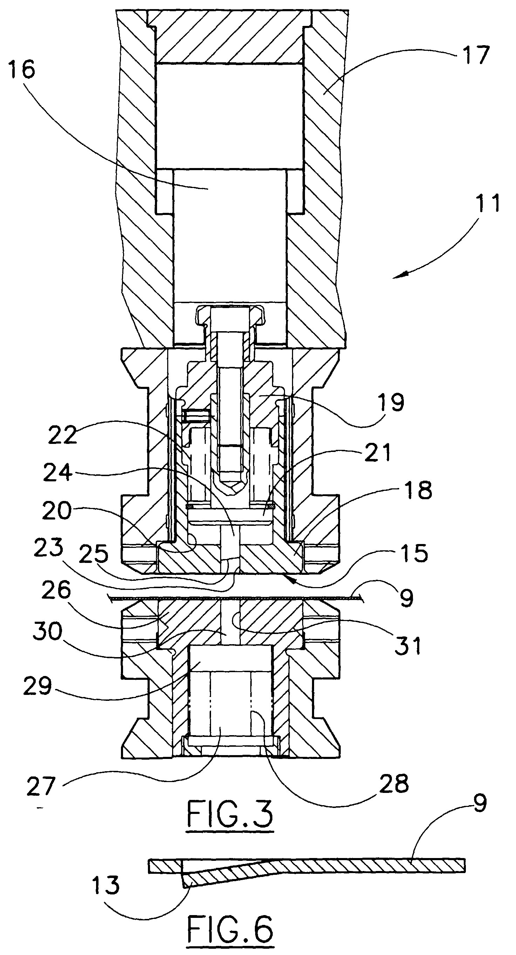

The supplementary punch-die unit 11 is shown in greater details and in the next operating steps in Figures 3-5, where it can be seen to comprise a punch 15 operated by a hydraulic piston 16 sliding inside a cylinder 17. The punch 15 is divided into two parts 18 and 19 that are axially sliding as regards one another and has an inside cavity 20, in which a plate 21 is slidingly housed that is elastically held back by a spring 22. From the plate 21 a push rod 24 with a fore end 25 adequately shaped as a function of the shape of the tongue element 13 to be realised extends inside an axial hole 23 passing through the front of the part 18 of the punch 15.

With the punch 15 an underlying fixed die 26 collaborates, which in turn provides an inside cavity 27 in which a plate 29 provided with a flat end push rod 30 is slidingly housed and is thrust by a spring 28, that slidingly extends in an axial through hole 31 of the die front.

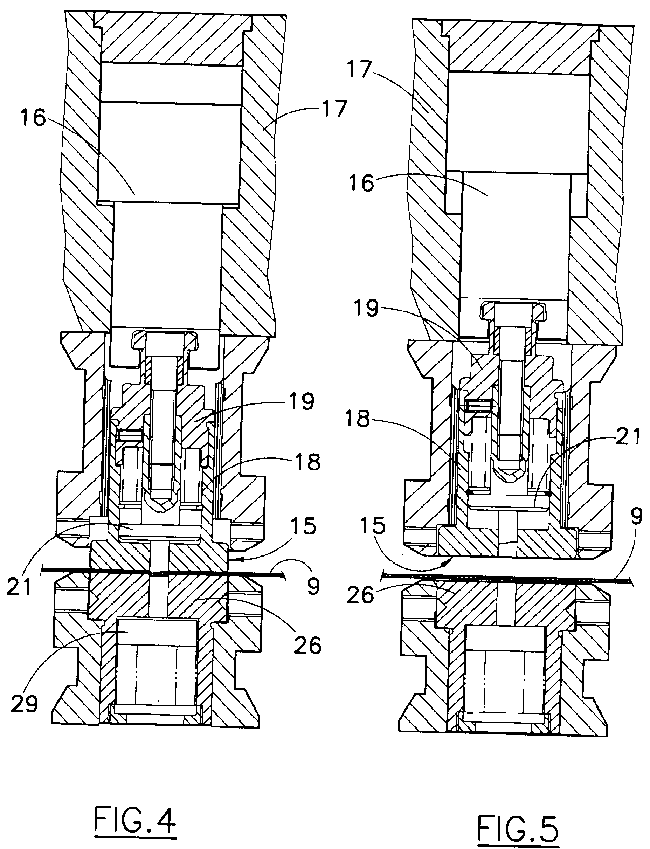

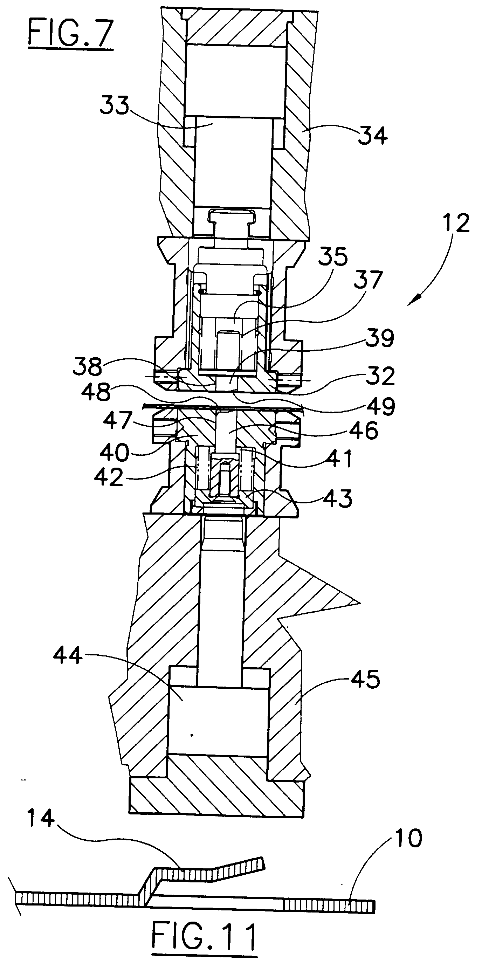

Because of the described structure, after a side limb 9 of the metal sheet 5 has been introduced between the punch 15 and the die 26 (Figure 3), the piston 16 is then lowered in the cylinder 17 in order to lower firstly the whole punch 15 until this one comes to contact with the metal sheet and then additionally the upper part 19 of the same and with it the plate 21 in order to allow the push rod 24 to descend in the axial hole 23 and, once reached the metal sheet, to penetrate in the facing axial hole 31 of the die 26 (Figure 4) so as to provide the tongue element 13, of a slightly tilted shape, that is illustrated in Figure 6.

After punching, the piston 16 is made go up again to remove the punch 15 from the die 26 and therefore from the punched metal sheet. In this step, illustrated in Figure 5, the spring 22 withdraws the plate 21 in order to facilitate the disengagement of the push rod 24.

The supplementary punch-die unit 12 is in turn shown in details and in subsequent operating steps in Figures 7-10, where it is shown to comprise a punch 32 operated by a hydraulic piston 33 sliding inside a cylinder 34. The punch 32 has an inside cavity 35, in which a plate 36 is slidingly housed that is elastically thrust by a spring 37. From the plate 36 a push rod 39 with fore extremity 49 that is adequately shaped as a function of the shape of the tongue element 14 to be realised extends inside an axial hole 38 passing through the front of the punch 32.

With the punch 32 an underlying fixed die 40 collaborates, which in turn provides an inside cavity 41 in which a plate 43 operated by a piston 44 sliding in a cylinder 45 is slidingly housed and elastically held back by a spring 42. The plate 43 is provided with a push rod 46 that extends slidingly in a through hole 47 of the front of the die 40 and that has a fore extremity 48 shaped in a complementary way to that of the push rod 39 of the punch 32.

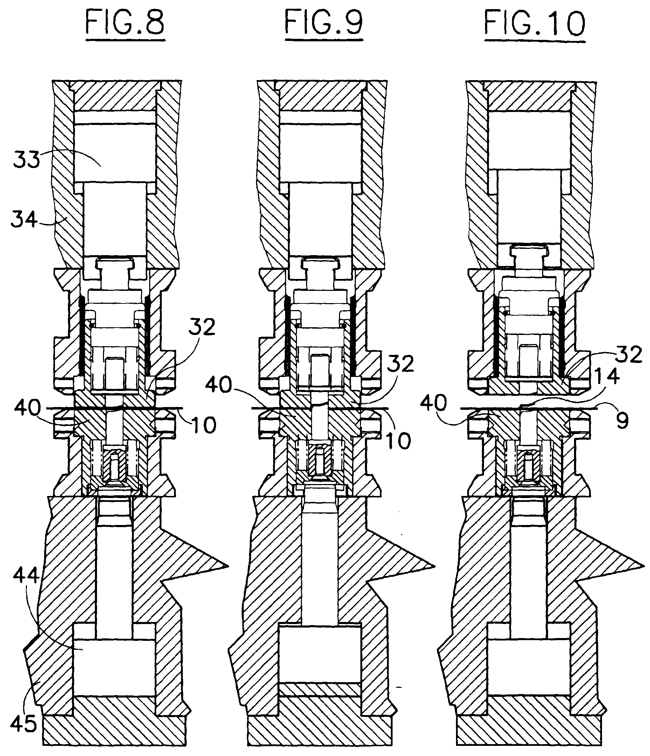

Because of the described structure, after a side limb 10 of the metal sheet 5 has been introduced between the punch 32 and the die 40 (Figure 7), the piston 33 is lowered in the cylinder 34 until the front extremity 49 of the push rod 39 is brought to contact with the metal sheet (Figure 8). Immediately afterwards, the piston 44 is made go up in the cylinder 45 in order to allow the push rod 46 to move up in the axial hole 47 and, once reached the metal sheet, to penetrate in the facing axial hole 38 of the punch 32 (Figure 9) so as to realise, together with the push rod 39, the tongue element 14, with hollow shape, that is illustrated in Figure 11.

Once the punching has been carried out, the piston 33 is made go up again to remove the punch 32 from the die 40 and the piston 44 is in turn lowered in order to remove the push rod 46 from the metal sheet. In this step, illustrated in Figure 10, the spring 37 withdraws the plate 36 so as to facilitate the disengagement of the push rod 39 from the metal sheet.

The metal sheet therefore exits the punching machine in the condition shown in Figure 12, with the limbs 9 and 10 provided with complementary tongue elements 13 and 14 in proximity of their side portions.

The following passage of the metal sheet through the bending machine 2 allows then, as usual, the folding of the limbs 9 and 10 for the formation of the desired box-like structure. Besides, owing to the presence of the tongue elements 13 and 14, that hook to each other as shown in Figure 16, the mutual seam folding is also realised, two by two, of the folded limbs.

## Claims

1. Process for the manufacture of box-like metal sheet structures with seam folded edges comprising, in sequence, a step of punching of a metal sheet (5) for forming a central part (8) with foldable side limbs (9, 10) and a step of bending for folding said side limbs (9, 10) with respect to said central part (8) so as to form the desired box-like structure, characterised in that the punching step also involves punching of adjacent portions of said side limbs (9, 10) for the formation of complementary tongue elements (13, 14) that can be seam folded to each other and the bending step involves the provision of a seam folding engagement of said complementary tongue elements (13, 14) for mutual fixing of the adjacent limbs (9, 10).

2. Equipment for the manufacture of box-like metal sheet structures with seam folded edges according with the process according to claim 1, comprising a punching machine (1) with punch-die units (7) for cutting the metal sheet and a bending machine (2) for folding side limbs (9, 10) of the metal sheet, characterized in that the punching machine (1) comprises a pair of additional punch-die units (11, 12) for punching adjacent portions of said foldable limbs (9, 10) of the metal sheet for the formation of said complementary tongue elements (13, 14) that are seam foldable to each other.
